# EUROPÄISCHE PATENTANMELDUNG

(11) **EP 0 675 075 A1**
(43) Veröffentlichungstag der Anmeldung: **04.10.1995**
(21) Anmeldenummer: 95101398.6
(22) Anmeldetag: 02.02.1995
(51) Int. Cl.: C01B 3/10

(54) **Verfahren zur Erzeugung von Wasserstoff**

(30) Priorität: 29.03.1994 DE 4410915
(71) Anmelder: Daimler-Benz Aerospace Aktiengesellschaft, D-80995 München (DE)
(72) Erfinder: Gomes, Jose, D-20249 Hamburg (DE)
(74) Vertreter: Hansmann, Dierk, Dipl.-Ing.

(57) **Zusammenfassung**

Bei einem Verfahren zur Gewinnung von Wasserstoff aus Wasser wird das Wasser durch ein Metall, vorzugsweise Eisen, reduziert und das dabei entstehende Metalloxid wird anschließend durch ein Reduktionsmittel wieder reduziert und dem Reaktionsprozeß erneut zugeführt. Das Reduktionsmittel für das Metalloxid wird in einer endothermen chemischen Reaktion erzeugt, wobei die erforderliche thermische Energie in einer Solaranlage gewonnen wird. Als Reduktionsmittel kann Kohlenmonoxid dienen, das aus Kohlendioxid und Kohle bei hoher Temperatur erzeugt wird.

## Beschreibung

Die Erfindung betrifft ein Verfahren zur Gewinnung von Wasserstoff aus Wasser auf thermochemischem Weg, bei dem das Wasser durch ein Metall reduziert wird und das entstandene Metalloxid anschließend durch ein in einer endothermen chemischen Reaktion erzeugtes Reduktionsmittel reduziert und erneut in den Reaktionsprozeß eingebracht wird. Ferner betrifft sie eine Vorrichtung zur Durchführung dieses Verfahrens.

Die Reduktion von Wasser in der gasförmigen bzw. flüssigen Phase durch ein Metall ist aus der Literatur bereits bekannt. Entsprechende Verfahren sind unter anderem in den DE-PS 73 978, 279 726, 303 281 und 847 139 sowie in der DE-AS 15 42 648 beschrieben. Die bei dieser Reaktion gebildeten Metallverbindungen werden bei diesen bekannten Verfahren wieder zu den Metallen reduziert und anschließend in den Reaktionsprozeß rückgeführt. Die Reduktionsmittel für die Metalloxide werden gemäß einigen dieser Verfahren in einer endothermen chemischen Reaktion erzeugt, wobei als Reduktionsmittel in der Regel Synthesegas in Form von Wassergas oder aber Generatorgas verwendet wird. Die Reduktion erfolgt bei diesen bekannten Verfahren unter der Zufuhr von Energie in der Weise, daß ein Teil der für die Erzeugung des Reduktionsmittels eingesetzten Kohle unter der Zufuhr von Luftsauerstoff verbrannt wird.

Aufgabe der Erfindung ist es, ein thermochemisches Verfahren der eingangs genannten Art zur Gewinnung von Wasserstoff so auszubilden, daß es, gleichzeitig möglichst kostengünstig und ökologisch verträglich zu realisieren ist. Weiterhin ist es Aufgabe der Erfindung, eine Vorrichtung zur Durchführung eines derartigen Verfahrens bereitzustellen.

Die Erfindung löst die erste Aufgabe durch ein Verfahren mit den kennzeichnenden Merkmalen des Patentanspruches 1. Vorteilhafte Weiterbildungen auf eine weitere Steigerung der Effektivität des Verfahrens gemäß der Erfindung sind in den Ansprüchen 2 bis 9 angegeben. Die Lösung der weiteren Aufgabe erfolgt mit einer Vorrichtung, deren kennzeichnende Merkmale im Patentanspruch 10 angegeben sind.

Das erfindungsgemäße Verfahren ermöglicht es, Wasserstoff auf thermochemischem Wege unter ausschließlichem Verbrauch von Wasser und eingestrahlter Sonnenenergie herzustellen. Die eingesetzten Reaktionspartner sind sämtlich ungiftig und im Vergleich zu anderen Herstellungsverfahren äußerst kostengünstig.

Zwar sind aus der Literatur bereits eine Reihe von Verfahren zur Erzeugung von Wasserstoff mittels Sonnenenergie bekannt. Als das derzeit wirtschaftlichste dieser Verfahren gilt dabei im allgemeinen die Wasserstoffgewinnung mittels Erdgasreformierung. Als vorteilhaft wird auch die Elektrolyse angesehen, bei der der Wasserstoff vollständig aus Wasser gewonnen wird. Bekannt sind weiterhin thermochemische Zyklen, wie sie beispielsweise in den Literaturstellen "Hydrogen Production from Solar Energy", von M. M. Eisenstadt und K. E. Cox, Solar Energy, Vol. 17, Seiten 59 - 65, Pergamon Press 1975, und "Solare Wasserstoffenergiewirtschaft", Gutachten und wissenschaftliche Beiträge vom Ad-hoc-Ausschuß beim Bundesminister für Forschung und Technologie, Bonn, April 1988, beschrieben sind. Bei diesen letztgenannten Verfahren müssen allerdings chemisch aggressive Medien eingesetzt werden, wodurch sie vergleichsweise kostenintensiv und damit weniger geeignet für großtechnische Anwendungen erscheinen.

Schließlich ist aus der EP 0 485 992 A1 bekannt, bei der Reformierung von Kohlenwasserstoffen oder Biomassen Sonnenenergie als für die zur Spaltung erforderliche Energie einzusetzen, das bei diesem bekannten Verfahren entstehende Produkt ist jedoch ein Gasgemisch, das anschließend aufwendig gereinigt werden muß. Demgegenüber ermöglicht die erfindungsgemäß vorgesehene Reformierung von Kohlenwasserstoffen mit anschließender Reduzierung von Metalloxid und die Reoxidierung von Metallen mit Wasser oder Wasserdampf die thermochemische Herstellung von reinem Wasserstoff zu wirtschaftlich und ökologisch akzeptablen Bedingungen.

Durch die bei der bevorzugten Ausführungsform des Verfahrens nach der Erfindung vorgesehene Verwendung von Kohle kann zudem die energetische Ausbeute noch wesentlich gesteigert werden. Zwar wird in diesem Fall neben Wasser auch Kohle verbraucht, jedoch gestalten sich bei diesem Verfahren sowohl die Energieerzeugung als auch die Energiewandlung von Kohle in Wasserstoff aus ökonomischer Sicht äußerst attraktiv. Zudem kann bei dieser Ausführungsform des erfindungsgemäßen Verfahrens sehr flexibel auf die Anforderungen des Marktes reagiert werden, da, je nach Marktsituation, der Anteil der Sonnenenergie an der Energiebilanz variiert werden kann: Sofern preisgünstige Kohle zur Verfügung steht, kann deren Anteil an der Energieerzeugung gegenüber demjenigen der Sonnenenergie erhöht werden. Umgekehrt kann, bei hohem Kohlepreis, der Sonnenenergieanteil vergrößert werden. Insofern ist durch das Verfahren nach der Erfindung ein gleichsam gleitender Übergang in eine Wasserstoffwirtschaft möglich, ohne daß hierbei marktwirtschaftliche Erfordernisse vernachlässigt werden müßten.Gegenüber elektrolytischen Verfahren zur Herstellung von Wasserstoff mittels Sonnenenergie besitzt das erfindungsgemäße Verfahren den Vorteil eines vergleichsweise hohen Wirkungsgrades, da der Wasserstoff in einem statt, wie bei der Elektrolyse, in zwei Verfahrensschritten hergestellt wird.

Nachfolgend soll die Erfindung anhand von in der Zeichnung dargestellten Ausführungsbeispielen näher erläutert werden. Es zeigen jeweils in prinzipieller Darstellung:
- Fig. 1: eine Anordnung zur Erzeugung von Wasserstoff mittels Sonnenenergie,
- Fig. 2: eine erste Anordnung zur Rückgewinnung des eingesetzten Reduktionsmittels und
- Fig. 3: eine Alternative zu der in. Fig. 2 gezeigten Anordnung.

Grundlage des hier beschriebenen Verfahrens ist die Reduktion von Wasser durch die Oxidation eines geeigneten Metalls, im Fall der hier beschriebenen Ausführungsbeispiele Eisen, gemäß der verallgemeinerten Reaktionsgleich

2 Fe + 3 H₂O = 2 Fe₂O₃ + 3 H₂.

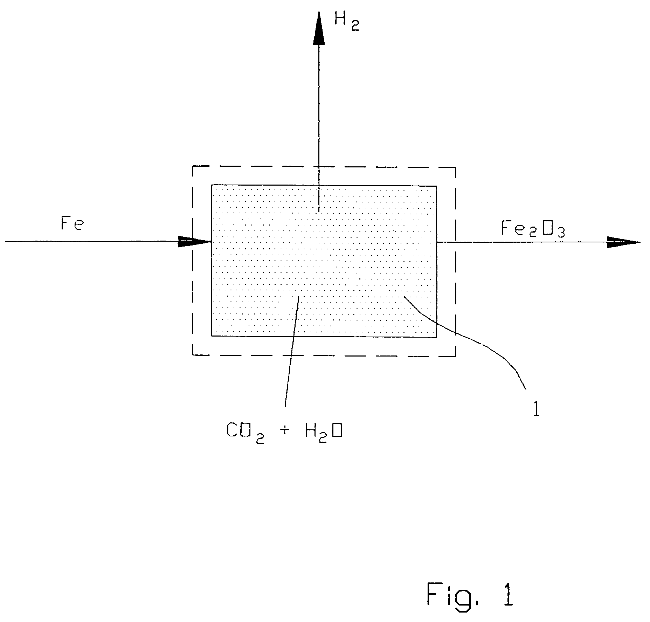

Diese Reaktion erfolgt in einem Prozeßbehälter 1, der eine wäßrige Kohlensäurelösung in Form einer Wasser-Kohlendioxidlösung enthält. Dieser Behälter wird, wie in Fig. 1 angedeutet, mit Eisen in Form von Eisenspänen oder Eisenpulver bzw. Eisenpellets beschickt. Die Säure übt einen Korrosionsangriff auf das Eisen aus, in dessen Folge das Eisen schließlich unter Hydrolisierung des Wasser oxidiert. Das dabei entstehende Wasserstoffgas kann entweder in entsprechenden Speicherbehältern oder in Metallhydridspeichern gelagert bzw. transportiert werden und steht als Energiequelle zur Verfügung.

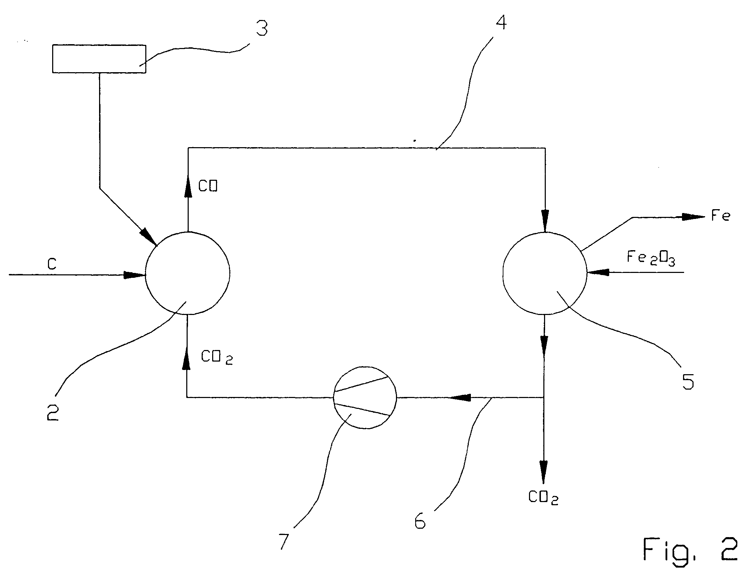

Das entstandene Eisenoxid wird anschließend in einer Anordnung, wie sie im Prinzip in Fig. 2 gezeigt ist, unter Verwendung thermischer Energie wieder reduziert und dem Reaktionsprozeß erneut zugeführt. Diese Reduktion kann mittels Kohlenmonoxid gemäß der Reaktion

Fe₂O₃ + 3 CO = 2 Fe + 3 CO₂

erfolgen. Das Kohlenmonoxid wird dabei, wie in Fig. 2 angedeutet, in einem geeigneten Behälter 2, einem sogenannten Receiver, unter Einkopplung von Sonnenenergie aus Kohlendioxid und Wasserstoff in der endothermen Reaktion

C + CO₂ + Energie = 2 CO

gewonnen. Der Kohlenstoff kann dabei in Form von Steinkohle, Braunkohle, Koks oder auch verkohltem organischen Material, beispielsweise Holzkohle, bestehen. Es ist auch möglich, das Material durch vorhergehende Erdgasreformierung zu gewinnen.

Die für diesen Prozeß erforderliche Sonnenenergie kann in geeigneter Weise in einer Sonnenenergieanlage 3, entweder einer sogenannten Solar-Tower- oder einer Solar-Dish-Anlage, aufgefangen werden.

Bei einer Solar-Tower-Anlage wird mit Hilfe eines Spiegelfeldes das Sonnenlicht, das auf die Spiegelfläche fällt, in Richtung des Turms (Tower) mit Empfänger (Receiver) an der Spitze reflektiert und dort konzentriert. Das konzentrierte Sonnenlicht wird am Receiver in Wärme umgesetzt. Diese Wärme kann als Prozeßwärme genutzt werden, indem der Empfänger als Reaktionsbehälter ausgebildet wird und die chemischen Reaktionen in seinem Inneren ablaufen. Eine andere Möglichkeit ist die Abführung von Wärme vom Receiver mittels eines Wärmetauschers. In diesem Fall befinden sich die Reaktionsbehälter am Boden und werden mit der vom Empfänger abgeführten Wärme als Prozeßwärme gespeist. Bei Verwendung der Kohlenmonoxidsynthese bietet sich CO₂ als Arbeitsgas für den Wärmetauscher an.

Bei einer Solar-Dish-Anlage handelt es sich um einzelne Parabolspiegel, die ihre jeweilige Strahlung auf einen Empfänger in ihrem Brennpunkt konzentrieren. Eine solche Anlage funktioniert nach den gleich Prinzipien wie die oben genannte Solar-Tower-Anlage. Bei den Solar-Dish-Anlagen stehen drei Möglichkeiten der technischen Realisierung zur Wasserstofferzeugung zur Verfügung.
a) Jeder Empfänger wird als Reaktionsbehälter ausgeführt, in dem die notwendigen Reaktionen ablaufen.
b) Jeweils mehrere Parabolspiegel einer Anlage werden zu einer Gruppe zusammengefaßt, die zentrale Reaktionsbehälter besitzt. In den Empfängern wird lediglich ein Arbeitsgas erwärmt, das die Reaktionsbehälter mit Prozeßwärme versorgt.
c) Alle Parabolspiegel einer Anlage besitzen einen Zentralen Reaktionsbehälter. Die Versorgung mit Prozeßwärme erfolgt wie in b).

In jedem Fall können zur Realisierung des beschriebenen Verfahrens zur Wasserstofferzeugung im Prinzip Solaranlagen herkömmlicher Bauart verwendet werden, die nur geringfügig modifiziert werden müssen. Einrichtungen zur Elektrizitätserzeugung, wie bei der Elektrolyse erforderlich, können ganz entfallen.

Das im Behälter 2 erzeugte Kohlenmonoxidgas wird über eine Leitung 4 in einen zweiten Behälter 5 geleitet, in dem sich das zu reduzierende Eisen(III)-oxid Fe₂O₃ befindet. Das hier entstehende Eisen kann anschließend im Behälter 1 erneut als Ausgangssubstanz für die Primärreaktion zur Wasserstofferzeugung genutzt werden. Auf diese Weise entsteht praktisch kein Verlust an Eisen als Reaktionspartner.

Bei der Reduktion des Eisens fällt erhitztes Kohlendioxid an, das entweder als Arbeitsgas, d.h. als Energieträger, dazu benutzt werden kann, die endotherme Reduktionsreaktion des Eisens aufrechtzuerhalten, oder aber über eine Rückführleitung 6 mittels einer Pumpe 7 als Energieträger und Reaktionspartner wieder in den Behälter 2 zurückgeleitet werden. Dort kann es durch erneute Reaktion mit dem eingesetzten Kohlenstoff für die Erzeugung von Kohlenmonoxid genutzt werden. Die Abtrennung des Kohlenmonoxids aus den Reaktionspartnern im Behälter 2 erfolgt dabei selektiv über Molekularsiebe. Dadurch wird eine Verschiebung der chemischen Gleichgewichtes erreicht, die eine Kohlenmonoxid-Synthese auch bei niedrigen Temperaturen ermöglicht.

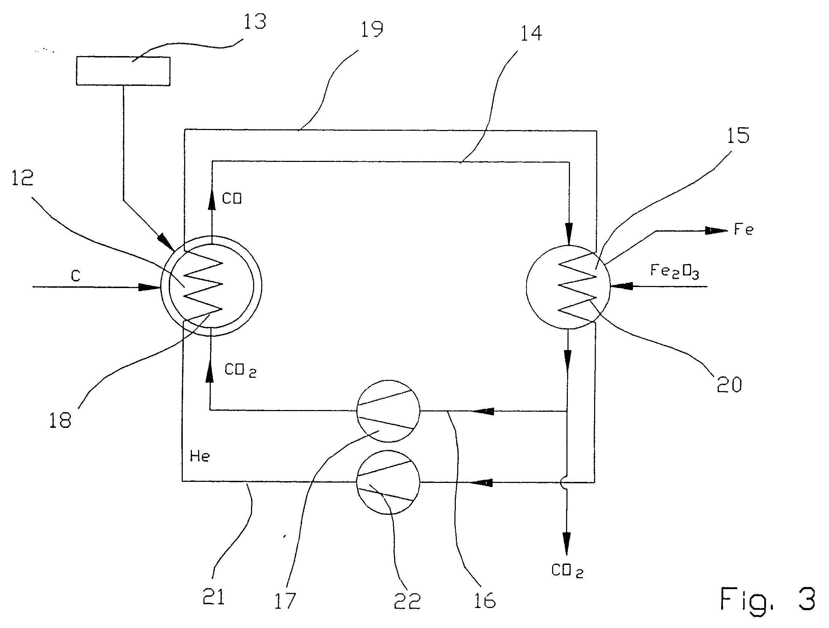

Bei der in Fig. 3 skizzierten Anordnung wird das bei der Wasserstofferzeugung entstandene Eisen(III)-oxid Fe₂O₃ zunächst durch Erwärmung auf etwa 1.000^{o}C im Vakuum bzw. 1.200^{o}C unter Atmosphärendruck zur Abgabe von Sauerstoff gemäß der Reaktionsgleichung

3 Fe₂O₃ + Energie = 2 Fe₃O₄ + 1/2 O₂

angeregt, wodurch das Eisen(II,III)-oxid Fe₃O₄ entsteht. Die hierfür benötigte Energie wird wieder, wie in der Figur angedeutet, durch eine Sonnenenergieanlage bereitgestellt. Diese Energie wird im Fall des in Fig. 3 dargestellten Ausführungsbeispiels über einen in den Reaktionsbehälter 12 integrierten Wärmetauscher 18 und eine separate Leitung 19 auf einen in den zweiten Behälter 15 integrierten Wärmetauscher 20 übertragen. Als Arbeitsmedium dient bei dem hier beschriebenen Ausführungsbeispiel Helium, das nach erfolgter Wärmeabgabe über die Rückführleitung 21 mittels der Pumpe 22 zur Wärmequelle, d.h. in den ersten Behälter 12, zurückbefördert wird.

Die in diesem ersten Behälter 12 ablaufende Reaktion besteht wieder, wie im Fall der anhand von Fig. 2 beschriebenen Anordnung, in einer Kohlenmonoxid-Synthese gemäß

C + CO₂ + Energie = 2 CO.

Das erzeugte Kohlenmonoxidgas gelangt über die Leitung 14 in den zweiten Behälter 15, in dem das Eisen(III)-oxid in einer zweistufigen Reaktion zu Eisen reduziert wird:

Das erhitzte, als Reaktionsprodukt entstandene Kohlendioxidgas wird mittels der Pumpe 17 durch die Leitung 16 zum Behälter 12 zurückbefördert, wo es zunächst als Arbeitsgas zum Heizen der Reaktionskammer dient. Auf diese Weise werden vor der Kohlenmonoxid-Synthese die flüchtigen Bestandteile aus der eingesetzten Kohle entfernt und dadurch deren Reinheitsgrad erhöht. Zugleich hilft diese Vorwärmung, die Temperatur im Reaktionsbehälter 12 so weit anzuheben, daß sich das chemische Gleichgewicht der Reaktion

C + CO₂ + Energie = 2 CO

möglichst weit auf der Seite des Kohlenmonoxids befindet.

Statt mit einer Kohlensäurelösung kann die Wasserstoffsynthese auch in einem Eisen-Wasserdampfprozeß erfolgen, bei dem neben Wasserstoff das Eisen(II,III)-oxid entsteht

3 Fe + 4 H₂O = Fe₃O₄ + 4 H₂,

wobei letzteres auch in diesem Fall anschließend wieder mittels Kohlenmonoxid zu Eisen reduziert werden kann. Der entstehende Wasserstoff wird in allen Fällen vorteilhaft mit Hilfe von Molekularsieben aus dem Reaktionsraum entfernt, um so die Wasserstoffausbeute bei niedrigen Temperaturen durch die Verschiebung des chemischen Gleichgewichtes zu erhöhen.

Selbstverständlich ist es im Rahmen der Erfindung auch möglich, anstelle von Eisen andere geeignete Metalle, wie Aluminium oder Magnesium, als Reaktionspartner einzusetzen. Ebenso kann im Rahmen der Erfindung die solare Energie ganz oder teilweise durch Prozeßwärme, die aus anderen Prozessen, beispielsweise bei der Energiegewinnung aus Kernkraft stammt, ersetzt werden.

## Patentansprüche

1. Verfahren zur Gewinnung von Wasserstoff aus Wasser auf thermochemischem Weg, bei dem das Wasser durch ein Metall reduziert wird und das entstandene Metalloxid anschließend durch ein in einer endothermen chemischen Reaktion erzeugtes Reduktionsmittel reduziert und erneut in den Reaktionsprozeß eingebracht wird, dadurch gekennzeichnet, daß die endotherme Reaktion zur Erzeugung des Reduktionsmittels unter Zufuhr solarer Energie erfolgt.

2. Verfahren nach Anspruch 1, dadurch gekennzeichnet, daß das Metall aus Eisen (Fe) besteht.

3. Verfahren nach Anspruch 2, dadurch gekennzeichnet, daß das Eisen durch eine wäßrige Kohlensäurelösung (H₂CO₃) und unter Ausschluß von freiem Sauerstoff (O₂) zu Eisen(III)-oxid (Fe₂O₃) oxidiert und das Wasser aus dieser Lösung zu Wasserstoff (H₂) reduziert wird.

4. Verfahren nach Anspruch 2 oder 3, dadurch gekennzeichnet, daß das Eisenoxid (Fe₂O₃) durch Kohlenmonoxid (CO) wieder zu Eisen reduziert wird.

5. Verfahren nach Anspruch 4, dadurch gekennzeichnet, daß das Kohlenmonoxid (CO) aus Kohlendioxid (CO₂) und Kohle (C) unter Zufuhr thermischer Energie erzeugt wird.

6. Verfahren nach einem der Ansprüche 2 bis 5, dadurch gekennzeichnet, daß das Eisen(III)-oxid (Fe₂O₃) zunächst unter Zufuhr thermischer Energie zu Eisen(II,III)-oxid (Fe₃O₄) reduziert wird.

7. Verfahren nach Anspruch 6, dadurch gekennzeichnet, daß auch die thermische Energie für die Reduktion des Eisen(III)-oxids in Form von Solarenergie bereitgestellt wird.

8. Verfahren nach einem der Ansprüche 1 bis 7, dadurch gekennzeichnet, daß der entstehende Wasserstoff durch Molekularsiebe aus dem Reaktionsraum (1) entfernt wird.

9. Verfahren nach einem der Ansprüche 5 bis 8, dadurch gekennzeichnet, daß das Kohlenmonoxid (CO) über Molekularsiebe aus dem Reaktionsraum (2,12) entfernt wird.

10. Vorrichtung zur Durchführung des Verfahrens nach einem der Ansprüche 1 bis 9, dadurch gekennzeichnet, daß der Reaktionsbehälter (2,12) für die endotherme chemische Reaktion zur Erzeugung des Reduktionsmittels für das entstehende Metalloxid durch solare Energie beaufschlagbar ist.
